# EUROPÄISCHE PATENTSCHRIFT

(11) **EP 1 042 042 B1**
(45) Veröffentlichungstag und Bekanntmachung des Hinweises auf die Patenterteilung: **16.06.2004**
(21) Anmeldenummer: 99953754.1
(22) Anmeldetag: 07.10.1999
(51) Int. Cl.: B01D 46/04, F04F 5/46

(54) **COANDA-INJEKTOR UND DRUCKGASLEITUNG ZUM ANSCHLUSS EINES SOLCHEN**
COANDA INJECTOR AND COMPRESSED GAS LINE FOR CONNECTING SAID INJECTOR
INJECTEUR A EFFET COANDA ET CONDUITE DE GAZ SOUS PRESSION DESTINEE A ETRE RACCORDEE A CET INJECTEUR

(30) Priorität: 28.10.1998 DE 19849639
(43) Veröffentlichungstag der Anmeldung: 11.10.2000
(73) Patentinhaber: Intensiv-Filter GmbH & Co KG, D-42555 Velbert - Langenberg (DE)
(72) Erfinder: KORDAS, Friedel, D-45663 Recklinghausen (DE); KNEBEL, Bettina, D-45133 Essen (DE); HÖFFKEN, Peter, D-45239 Essen (DE)
(74) Vertreter: Christophersen & Partner
(86) Internationale Anmeldenummer: PCT/EP1999/007523
(87) Internationale Veröffentlichungsnummer: WO 2000/024496

(56) Entgegenhaltungen:
- EP-A- 0 034 645
- WO-A-95/06509
- DE-C- 19 701 983

## Beschreibung

Die vorliegende Erfindung betrifft einen Coanda-Injektor, insbesondere zum Abreinigen von Filterelementen von Staubgasfiltern, umfassend eine Eintrittsöffnung für ein anzusaugendes Medium, eine Vorkammer mit wenigstens einer Eintrittsöffnung für ein über eine Druckgasleitung zuführbares Druckmedium und mit einem vorzugsweise ringförmigen Düsenspalt, und eine Austrittsöffnung für das anzusaugende Medium und das Druckmedium. Die Erfindung betrifft ferner eine Druckgasleitung zum Anschluß eines solchen Coanda-Injektors.

Der nach dem rumänischen Ingenieur und Flugpionier Henri Coanda benannte Coanda-Effekt beschreibt die Eigenschaft von freien Fluidströmen geringen Querschnitts, sich an benachbarte Körperoberflächen anzulegen und auch starken Richtungsänderungen der Oberflächenkontur ablösungsfrei zu folgen. Coanda-Injektoren erzeugen durch Zuführung einer kleinen Menge eines Druckmediums, das heißt eines Mediums erhöhten Drucks, eine hochvolumige Medienströmung niedrigeren Drucks, in der Regel von etwa Umgebungsdruck, nach dem Coanda-Effekt. Als Medien finden dabei Luft, Stickstoff und andere in der Industrie üblicherweise eingesetzte Gase Verwendung.

Die Anwendungsbereiche von Coanda-Injektoren sind äußerst vielfältig. So werden diese in der Industrie beispielsweise zum Kühlen von Maschinenelementen - wie Motoren und Getrieben - und elektrischen Schaltelementen, zum Absaugen von in der Industrie anfallenden Gasen und Stäuben, zum Transport von Warmluft, Dampf oder Flüssigkeit, zum Trocknen. zum Auflockern von Produktanhäufungen, zum Freiblasen von Staubablagerungen und insbesondere zum Abreinigen von Filterelementen von Staubgasfiltern - wie Filterschläuchen, Filterpatronen, Filterkerzen und dergleichen - durch Rückspülung eingesetzt, wie beispielsweise aus der EP 0 034 645 B1 der Anmelderin bekannt.

Bei den bisher bekannten Coanda-Injektoren ist die Eintrittsöffnung der Vorkammer der Einfachheit halber seitlich angeordnet, so daß die Eintrittsöffnung der Vorkammer und die Eintrittsöffnung für das anzusaugende Medium im wesentlichen senkrecht zueinander stehen. Der Anschluß an die Druckgasleitung ist somit unsymmetrisch. Dadurch erfährt das Druckmedium beim Durchlaufen des Strömungswegs, von der Druckgasleitung in die Eintrittsöffnung der Vorkammer durch die Vorkammer hindurch und schließlich zum Düsenspalt hinaus, mehrere Umlenkungen. Umlenkungen eines Druckmediums verursachen insbesondere bei großen Strömungsgeschwindigkeiten erhebliche Druckverluste, die den Wirkungsgrad von Injektoren erheblich reduzieren und einen größeren Energieverbrauch mit sich bringen. Die unsymmetrische seitliche Anordnung der Eintrittsöffnung der Vorkammer bedingt mehrere Umlenkungen im Strömungsweg des Druckmediums, der bei den bekannten Coanda-Injektoren erhebliche Druckverluste mit sich bringt und so den Wirkungsgrad der Coanda-Injektoren reduziert. Darüber hinaus bedingen auch die bisher bekannten Ausgestaltungen der Eintrittsöffnung der Vorkammer Druckverluste, die den Wirkungsgrad vermindern, ebenso wie die bisher gebräuchlichen Anschlußmittel, wie beispielsweise Rohrverschraubungen, Bögen, T-Stücke und dergleichen. Zusätzlich ist durch die unsymmetrische seitliche Anordnung der Eintrittsöffnung der Vorkammer hinsichtlich der Bauform ein größerer Raumbedarf gegeben.

Der Erfindung liegt in Anbetracht dieses Standes der Technik die **Aufgabe** zugrunde, einen Coanda-Injektor der eingangs genannten Art unter Meidung der beschriebenen Nachteile derart zu verbessern, daß ein einfacher, Druckverluste reduzierender und raumsparender Anschluß an eine Druckgasleitung ermöglicht ist.

Die Aufgabe ist erfindungsgemäß dadurch **gelöst**, daß die Eintrittsöffnung und die wenigstens eine Eintrittsöffnung der Vorkammer im wesentlichen in einer Ebene angeordnet sind, so daß der Coanda-Injektor über die Eintrittsöffnung der Vorkammer unmittelbar an die Druckgasleitung anschließbar ist.

Dadurch, daß die Eintrittsöffnung der Vorkammer im wesentlichen, das heißt insbesondere mit nur geringen Unterschieden in der Höhe, in einer Ebene mit der Eintrittsöffnung für das anzusaugende Medium liegt, sind die Druckverluste verursachenden Umlenkungen im Strömungsweg erheblich reduziert, so daß der erfindungsgemäße Coanda-Injektor einen verbesserten Wirkungsgrad aufweist. Darüber hinaus ist durch die erfindungsgemäße Ausgestaltung ein einfacherer und raumsparender Anschluß des Coanda-Injektors an die Druckgasleitung gegeben, insbesondere da der Abstand zwischen der Druckgasleitung und dem Coanda-Injektor sehr gering gehalten werden kann.

In einer vorteilhaften Ausgestaltung der Erfindung ist die Vorkammer ringförmig ausgebildet und umgibt die Eintrittsöffnung für das anzusaugende Medium. In einer weiteren Ausgestaltung weist die Vorkammer zwei einander gegenüberliegende Eintrittsöffnungen auf. Durch diese Ausgestaltung ist der Coanda-Injektor zentrisch in Richtung einer seiner Mittelachsen an die Druckgasleitung anschließbar, was weitere Raumeinsparungen hinsichtlich der Bauform mit sich bringt. Darüber hinaus verbessern die symmetrisch angeordneten Eintrittsöffnungen der Vorkammer den Strömungsweg und damit den Wirkungsgrad des erfindungsgemäßen Coanda-Injektors.

In einer weiteren vorteilhaften Ausgestaltung der Erfindung ist die Eintrittsöffnung der Vorkammer im Abströmbereich mit strömungstechnischen Abrundungen versehen. Der Abströmbereich ist dabei in erster Linie in dem auf dem Strömungsweg zum Düsenspalt hin gelegenen Bereich gegeben. Durch die nach strömungstechnischen Gesichtspunkten ausgestalteten Abrundungen werden weitere Druckverluste verhindert.

Gemäß einer weiteren vorteilhaften Ausgestaltung der Erfindung ist der Düsenspalt einstellbar. Dadurch wird gewährleistet, daß ein definierter, für den Coanda-Effekt erforderlicher Düsenspalt gezielt vorgebbar ist. Vorteilhafterweise weist die Vorkammer dazu einen verstellbaren Deckel auf, der vorzugsweise zum Verstellen mindestens zwei Abstandsvertiefungen aufweist, mittels deren die Höhe des Deckel bezüglich der Vorkammer und damit der Düsenspalt einstellbar ist. Vorteilhafterweise ist die Eintrittsöffnung der Vorkammer im Deckel angeordnet. Dadurch wird ein einfaches Verstellen des Deckels ohne aufwendige Demontage- und Montagearbeiten ermöglicht, insbesondere da die Eintrittsöffnung der Vorkammer gleichzeitig mit dem Deckel verstellbar ist. Vorteilhafterweise ist der Deckel mit der Vorkammer gasdicht verbunden. Dabei ist eine hinreichende Dichtigkeit auch ohne zusätzliche Dichtungsmittel gegeben. Dennoch können zusätzliche Dichtungsmittel verwendet werden, wenn dies erforderlich ist, um mögliche Druckverluste weiter zu reduzieren. Zur Verbindung des Deckels mit der Vorkammer ist diese vorteilhafterweise in einem oberen Rand umgebördelt. Selbstverständlich sind aber auch andere geläufige Verbindungen anwendbar, wie Schraub-, Niet-, Schweiß-, Klebe-, Klammerverbindungen und dergleichen, insbesondere sogenannte Bajonettverschlüsse. Zum Anschluß am die Druckgasleitung ist der Coanda-Injektor vorteilhafterweise an die Druckgasleitung angeschweißt. Aber auch hier können andere Anschlußverbindungen zum Einsatz kommen.

Gemäß einer weiteren besonders vorteilhaften Ausgestaltung der Erfindung ist der Coanda-Injektor mit wenigstens einem Verbindungsstück an die Druckgasleitung anschließbar. Dadurch ist eine weitere Vereinfachung des Anschlusses gegeben, die darüber hinaus eine optimale gasdichte Verbindung nach Art einer Werkstoff gegen Werkstoff Dichtung ohne die Verwendung zusätzlicher Dichtungsmaterialien ermöglicht.

Desweiteren wird mit der vorliegenden Erfindung eine Druckgasleitung zum Anschluß eines erfindungsgemäßen Coanda-Injektors vorgeschlagen, die dadurch gekennzeichnet ist, daß diese im Anschlußbereich der Eintrittsöffnung der Vorkammer mit strömungstechnischen Abrundungen versehen ist. Dadurch werden weitere Druckverluste aufgrund von strömungstechnisch ungünstigen Umlenkungen und Anschlußmitteln weiter reduziert.

Gemäß einer weitern vorteilhaften Ausgestaltung der Erfindung ist die Druckgasleitung im Bereich der Eintrittsöffnung der Vorkammer mit Abflachungen versehen, wodurch die Anschlußebene zum Deckel dann parallel verläuft und die Nachteile durch die unterschiedlichen Höhen in Längs- und Querrichtung infolge des runden Querschnitts der Anschlußleitung vermieden werden.

Weitere Einzelheiten, Merkmale und Vorteile der Erfindung ergeben sich aus der nachfolgenden Beschreibung der zugehörigen Zeichnungen, in denen bevorzugte Ausführungsformen erfindungsgemäßer Coanda-Injektoren dargestellt sind. Dabei zeigen:
- Fig. 1: eine schematische Seitenansicht einer Ausführungsform eines an eine Druckgasleitung angeschlossenen Coanda-Injektors;
- Fig. 2: eine weitere schematische Seitenansicht der Ausführungsform gemäß Fig. 1:
- Fig. 3: eine schematische Seitenansicht einer weiteren Ausführungsform eines an eine Druckgasleitung angeschlossenen Coanda-Injektors, ähnlich Fig. 1;
- Fig. 4: eine schematische Seitenansicht einer weiteren Ausführungsform eines an eine Druckgasleitung angeschlossenen Coanda-Injektors, ähnlich Fig. 1;
- Fig. 5: in einer schematischen Draufsicht einen Teil der Vorkammer eines erfindungsgemäßen Coanda-Injektors gemäß Fig. 4;
- Fig. 6: im Detail einen Auschnitt gemäß Fig. 5 in einer Seitenansicht;
- Fig.7a: eine schematische Seitenansicht einer Ausführungsform einer erfindungsgemäßen Druckgasleitung;
- Fig. 7b: eine Ansicht des Querschnitts der Druckgasleitung gemäß Fig. 7a und
- Fig. 8: eine Seitenansicht von mehreren an eine Druckgasleitung angeschlossenen Coanda-Injektoren gemäß der Erfindung.

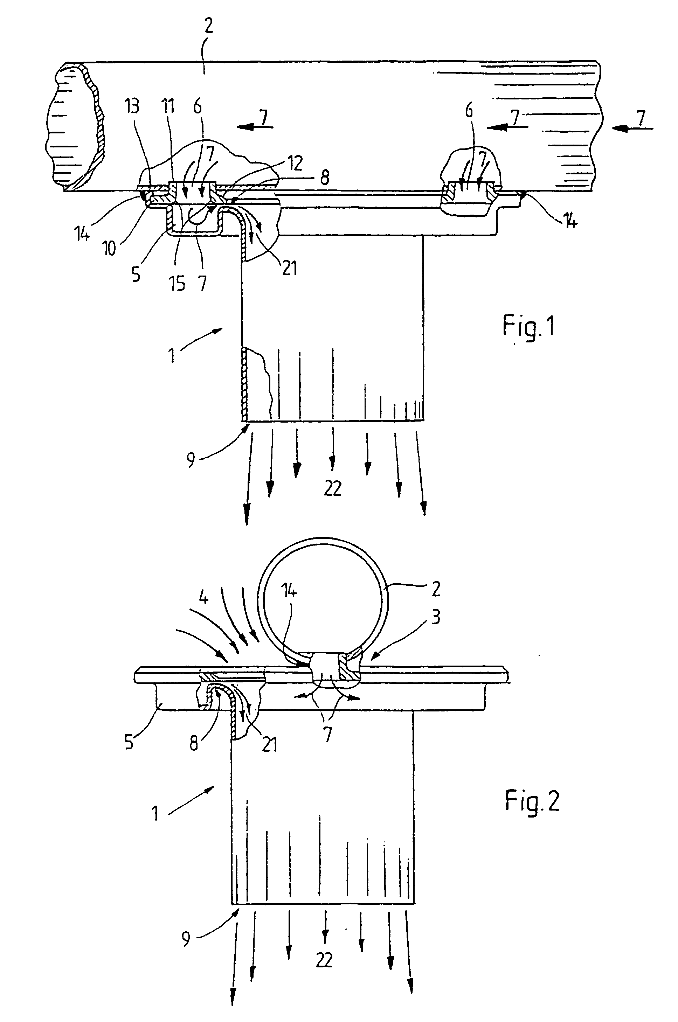

Fig. 1 und Fig. 2 zeigen jeweils in einer schematischen Seitenansicht eine Ausführungsform eines erfindungsgemäßen Coanda-Injektors 1 der an eine Druckgasleitung 2 angeschlossenen ist. Der Coanda-Injektor 1 umfaßt eine, eine Eintrittsöffnung 3 für ein anzusaugendes Medium 4 ringförmig umgebende Vorkammer 5 mit zwei einander symmetrisch gegenüberliegenden Eintrittsöffnungen 6 für ein über die Druckgasleitung 2 zuführbares Druckmedium 7 und mit einem vorzugsweise ringförmigen Düsenspalt 8 mit einer für den Coanda-Effekt typischen Profilierung, und eine Austrittsöffnung 9 für das anzusaugende Medium 4 und das Druckmedium 7. Die Eintrittsöffnung 3 und die zwei Eintrittsöffnungen 6 der Vorkammer 5 sind im wesentlichen in einer Ebene angeordnet, so daß der Coanda-Injektor 1 über die zwei Eintrittsöffnungen 6 der Vorkammer 5 unmittelbar an die Druckgasleitung 2 angeschlossen sind.

Die Vorkammer 5 weist einen Deckel, 10 auf, in dem die Eintrittsöffnungen 6 eingearbeitet sind. Dabei weisen die Eintrittsöffnungen 6 eine kragenförmig, leicht kegelig ausgearbeitete Erhöhung 11 auf, welche gasdicht in entsprechende Öffnungen in der Druckgasleitung 2 eingreifen, ohne das zusätzliche Dichtungsmaterialien notwendig sind. Die Eintrittsöffnungen 6 der Vorkammer 5 sind im strömungstechnischen Abströmbereich mit Abrundungen 15 versehen, die Druckverluste aufgrund von Umlenkungen des Strömungsverlaufs des Druckmediums 7 vermindern. Der Deckel 10 weist eine für den Coanda-Effekt typische Deckelabschrägung 12 auf. Die Vorkammer 5 und der Deckel 10 sind durch eine Umbördelung 13 des oberen Randes der Vorkammer 5 hinreichend gasdicht miteinander verbunden. Zur sicheren Befestigung des Coanda-Injektors 1 an der Druckgasleitung 2 ist dieser im mit 14 gekennzeichneten Bereich an der Druckgasleitung 2 angeschweißt.

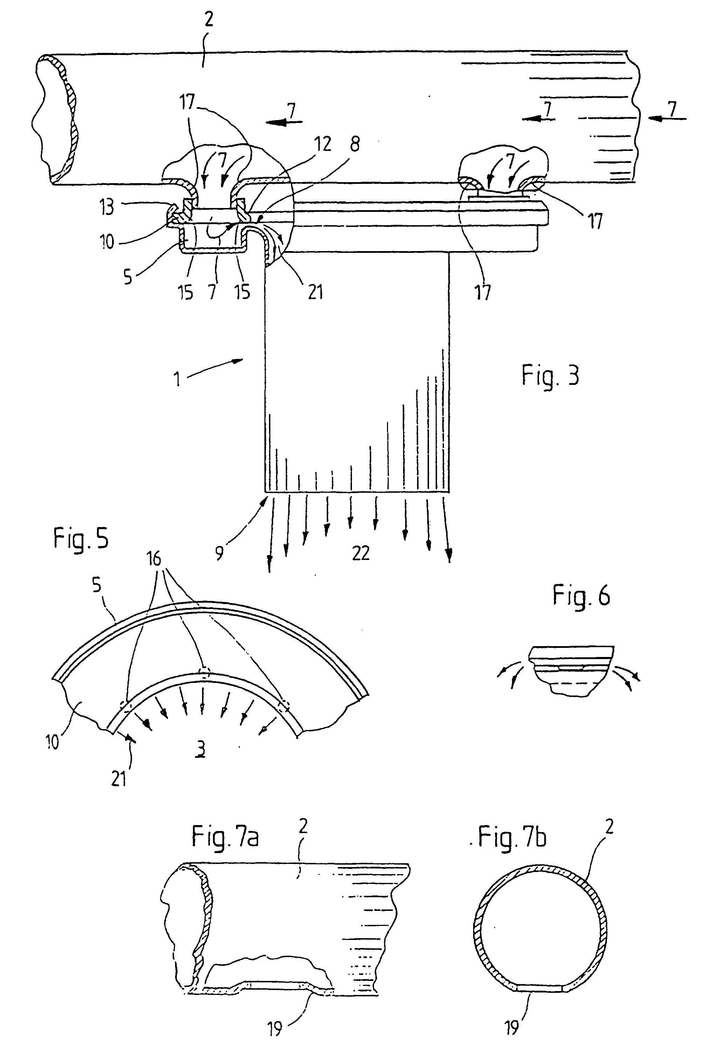

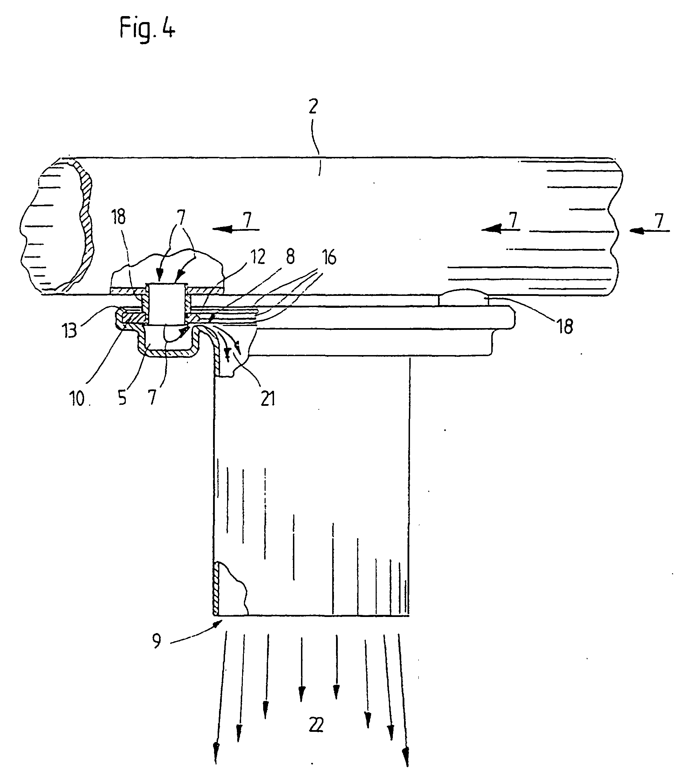

Fig. 3 zeigt eine weitere Ausführungsform eines erfindungsgemäßen Coanda-Injektors 1. Bei dieser Ausführungsform ist die Druckgasleitung 2 im Anschlußbereich der Eintrittsöffnungen 6 der Vorkammer 5 mit strömungstechnischen Abrundungen 17 versehen, die zur Reduzierung von Druckverlusten aufgrund von Umlenkungen des Druckmediums 7 im Strömungsweg dienen, und in ausgehalster Form ausgebildet sind.

Fig. 4 zeigt eine weitere Ausführungsform eines erfindungsgemäßen Coanda-Injektors 1. Bei dieser Ausführungsform sind die Eintrittsöffnungen 6 der Vorkammer 5 jeweils mit einem Verbindungsstück 18 an die Druckgasleitung 2 angeschlossen, die eine optimale gasdichte Verbindung in der Art Werkstoff gegen Werkstoff schaffen, ohne das zusätzliche Dichtmaterialen erforderlich sind. Der Deckel 10 ist zum Einstellen des Düsenspalts 8 verstellbar ausgebildet. Dazu weist der Deckel 10 drei Abstandsvertiefungen 16 auf, die in Fig. 5 und Fig. 6 in weiteren Ansichten näher dargestellt sind.

Fig. 5 zeigt in einer schematischen Draufsicht einen Teil der Vorkammer 5 des Coanda-Injektors 1 gemäß Fig. 4. Dabei sind, wie im Detail anhand Fig. 6, einem Ausschnitt gemäß Fig. 5 in einer Seitenansicht, zu erkennen, die drei Abstandsvertiefungen 16 als Nocken ausgebildet, auf denen der Deckel 10 in der Vorkammer 5 in verschiedenen Höhen ruhend angeordnet werden kann.

Fig. 7a zeigt eine schematische Seitenansicht einer Ausführungsform einer Druckgasleitung 2, die im Anschlußbereich der Eintrittsöffnungen 6 der Vorkammer 5 mit einer Abflachung 19 versehen ist, die es ermöglicht den Coanda-Injektor 1 derart an die Druckgasleitung 2 anzuschließen, daß die Anschlußebene der Druckgasleitung 2 zum Deckel 10 parallel verläuft. Durch diese Ausgestaltung werden die Nachteile der unterschiedlichen Höhen in Längs- und Querrichtung infolge des runden Querschnitts der Druckgasleitung 2 vermieden. Fig. 7b zeigt eine Ansicht des Querschnitts der Druckgasleitung 2 gemäß Fig. 7a.

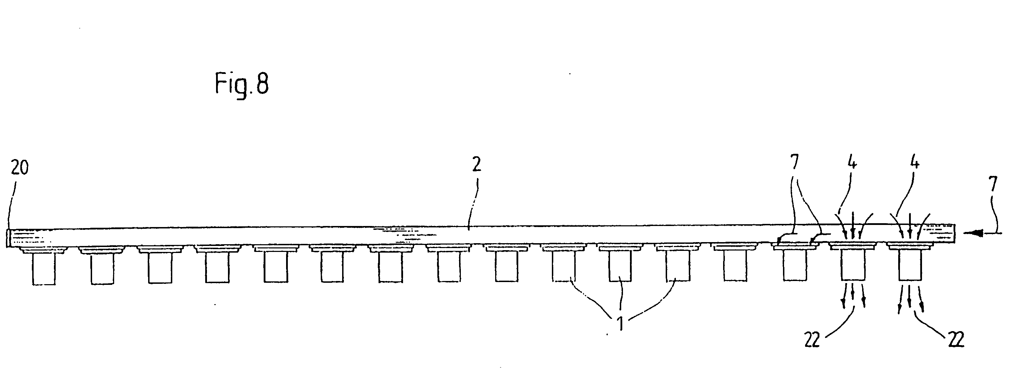

Fig. 8 zeigt eine Seitenansicht von sechzehn an eine an einem Ende 20 offene Druckgasleitung 2 angeschlossenen Coanda-Injektoren 1 gemäß der Erfindung. Die Druckgasleitung 2 wird dabei von einem hier nicht dargestellten Druckbehälter mit dem Druckmedium 7 versehen. Bei den an eine Druckgasleitung 2 angeschlossenen Coanda-Injektoren 1 strömt das Druckmedium 7 in Richtung des jeweiligen Pfeils durch die Druckgasleitung 2 in Richtung des offenen Endes 20 und verteilt sich auf die einzelnen Coanda-Injektoren 1. Dabei strömt das Druckmedium durch die Eintrittsöffnungen 6 in die ringförmige Vorkammer 5 eines jeden Coanda-Injektors 1, verteilt sich dort und strömt dann durch den Düsenspalt 8 in Richtung der Austrittsöffnung 9. Durch die Profilierung des Düsenspaltes 8 wird gemäß dem Coanda-Effekt eine starke Randströmung 21 erzeugt durch die in dem Bereich hinter dem Düsenspalt 8 eine Unterdruckzone entsteht, die zur Folge hat, daß ein sekundäres Medium 4 angesaugt und in Strömungsrichtung zur Austrittsöffnung 9 strömt und den aus Ausblasstrom 22 aus Druckmedium 7 und angesaugtem Medium 4 bildet.

### Bezugszeichenliste

- 1: Coanda-Injektor
- 2: Druckgasleitung
- 3: Eintrittsöffnung
- 4: Medium
- 5: Vorkammer
- 6: Eintrittsöffnung
- 7: Druckmedium
- 8: Düsenspalt
- 9: Austrittsöffnung
- 10: Deckel
- 11: Erhöhung
- 12: Deckelabschrägung
- 13: Umbördelung
- 14: Schweißnaht
- 15: Abrundung
- 16: Abstandsvertiefungen
- 17: Abrundung
- 18: Verbindungsstück
- 19: Abflachung
- 20: Ende
- 21: Randströmung
- 22: Ausblasstrom

## Patentansprüche

1. Coanda-Injektor, insbesondere zum Abreinigen von Filterelementen von Staubgasfiltern, umfassend eine Eintrittsöffnung (3) für ein anzusaugendes Medium (4), eine Vorkammer (5) mit wenigstens einer Eintrittsöffnung (6) für ein über eine Druckgasleitung (2) zuführbares Druckmedium (7) und mit einem vorzugsweise ringförmigen Düsenspalt (8), und eine Austrittsöffnung (9) für das anzusaugende Medium (4) und das Druckmedium (7), **dadurch gekennzeichnet, daß** die Eintrittsöffnung (3) und die wenigstens eine Eintrittsöffnung (6) der Vorkammer (5) im wesentlichen in einer Ebene angeordnet sind, so daß der Coanda-Injektor (1) über die Eintrittsöffnung (6) der Vorkammer (5) unmittelbar an die Druckgasleitung (2) anschließbar ist.

2. Coanda-Injektor nach Anspruch 1, **dadurch gekennzeichnet, daß** die Vorkammer (5) ringförmig ausgebildet ist und die Eintrittsöffnung (3) für das anzusaugende Medium (4) umgibt.

3. Coanda-Injektor nach Anspruch 1 oder Anspruch 2, **dadurch gekennzeichnet, daß** die Vorkammer (5) zwei einander gegenüberliegende Eintrittsöffnungen (6) aufweist.

4. Coanda-Injektor nach einem oder mehreren der Ansprüche 1 bis 3, **dadurch gekennzeichnet, daß** die Eintrittsöffnung (6) der Vorkammer (5) im Abströmbereich mit strömungstechnischen Abrundungen (15) versehen ist.

5. Coanda-Injektor nach einem oder mehreren der Ansprüche 1 bis 4, **dadurch gekennzeichnet, daß** der Düsenspalt (8) einstellbar ist.

6. Coanda-Injektor nach einem oder mehreren der Ansprüche 1 bis 5, **dadurch gekennzeichnet, daß** die Vorkammer (5) einen verstellbaren Deckel (10) aufweist, über welchen der Düsenspalt (8) einstellbar ist.

7. Coanda-Injektor nach Anspruch 5, **dadurch gekennzeichnet, daß** der Deckel (10) zum Verstellen mindestens zwei Abstandsvertiefungen (16) aufweist.

8. Coanda-Injektor nach einem oder mehreren der Ansprüche 1 bis 7, **dadurch gekennzeichnet, daß** die Eintrittsöffnung (6) der Vorkammer (5) im Deckel (10) angeordnet ist.

9. Coanda-Injektor nach einem oder mehreren der Ansprüche 6 bis 8, **dadurch gekennzeichnet, daß** der Deckel (10) mit der Vorkammer (5) gasdicht verbunden ist.

10. Coanda-Injektor nach einem oder mehreren der Ansprüche 1 bis 9, **dadurch gekennzeichnet, daß** dieser an die Druckgasleitung (2) angeschweißt ist.

11. Coanda-Injektor nach einem oder mehreren der Ansprüche 1 bis 10, **dadurch gekennzeichnet, daß** dieser mit wenigstens einem Verbindungsstück (18) an die Druckgasleitung (2) anschließbar ist.

12. Druckgasleitung zum Anschluß eines Coanda-Injektors nach einem oder mehreren der Ansprüche 1 bis 11, **dadurch gekennzeichnet, daß** diese im Anschlußbereich der Eintrittsöffnung (6) der Vorkammer (5) mit strömungstechnischen Abrundungen (17) versehen ist.

13. Druckgasleitung nach Anspruch 12, **dadurch gekennzeichnet, daß** diese zumindest im Anschlußbereich der Eintrittsöffnung (6) der Vorkammer (5) mit Abflachungen (19) versehen ist.

## Claims

1. Coanda injector, in particular for cleaning filter elements of dust/gas filters, comprising an inlet opening (3) for a medium (4) that is to be sucked up, an antechamber (5) having at least one inlet opening (6) for a pressurized medium (7) which can be fed in via a compressed gas line (2) and having a preferably annular nozzle gap (8), and an outlet opening (9) for the medium (4) that is to be sucked up and the pressurized medium (7), **characterized in that** the inlet opening (3) and the at least one inlet opening (6) of the antechamber (5) are arranged essentially in one plane so that the Coanda injector (1) can be connected directly to the compressed gas line (2) via the inlet opening (6) of the antechamber (5).

2. Coanda injector according to Claim 1, **characterized in that** the antechamber (5) is designed in an annular manner and surrounds the inlet opening (3) for the medium (4) that is to be sucked up.

3. Coanda injector according to Claim 1 or Claim 2, **characterized in that** the antechamber (5) has two inlet openings (6) that lie opposite one another.

4. Coanda injector according to one or more of Claims 1 to 3, **characterized in that** the inlet opening (6) of the antechamber (5) is provided in the flow-out region with fluidic rounded sections (15).

5. Coanda injector according to one or more of Claims 1 to 4, **characterized in that** the nozzle gap (8) can be adjusted.

6. Coanda injector according to one or more of Claims 1 to 5, **characterized in that** the antechamber (5) has an adjustable cover (10) by means of which the nozzle gap (8) can be adjusted.

7. Coanda injector according to Claim 5, **characterized in that** the cover (10) has at least two spacing depressions (16) for adjustment purposes.

8. Coanda injector according to one or more of Claims 1 to 7, **characterized in that** the inlet opening (6) of the antechamber (5) is arranged in the cover (10).

9. Coanda injector according to one or more of Claims 6 to 8, **characterized in that** the cover (10) is connected to the antechamber (5) in a gastight manner.

10. Coanda injector according to one or more of Claims 1 to 9, **characterized in that** said injector is welded to the compressed gas line (2).

11. Coanda injector according to one or more of Claims 1 to 10, **characterized in that** said injector can be connected to the compressed gas line (2) via at least one connection piece (18).

12. Compressed gas line for the connection of a Coanda injector according to one or more of Claims 1 to 11, **characterized in that** said line is provided, in the connection region of the inlet opening (6) of the antechamber (5), with fluidic rounded sections (17).

13. Compressed gas line according to Claim 12, **characterized in that** said line is provided, at least in the connection region of the inlet opening (6) of the antechamber (5), with flattened sections (19).

## Revendications

1. Injecteur à effet coanda, en particulier pour le nettoyage d'éléments de filtre pour des filtres antipoussières à gaz, comprenant une ouverture d'entrée (3) pour un fluide à aspirer (4), une préchambre (5) avec au moins une ouverture d'entrée (6) pour un fluide sous pression (7) pouvant être amené par l'intermédiaire d'une conduite de gaz sous pression (2) et avec une fente d'injecteur (8) de préférence de forme annulaire et une ouverture de sortie (9) pour le fluide à aspirer (4) et le fluide sous pression (7), **caractérisé en ce que** l'ouverture d'entrée (3) et l'au moins une ouverture d'entrée (6) de la préchambre (5) sont disposées sensiblement sur un même plan, de sorte que l'injecteur à effet coanda (1) peut être raccordé directement sur la conduite de gaz sous pression (2) par l'intermédiaire de l'ouverture d'entrée (6) de la préchambre (5).

2. Injecteur à effet coanda selon la revendication 1, **caractérisé en ce que** la préchambre (5) est configurée en forme d'anneau et entoure l'ouverture d'entrée (3) pour le fluide à aspirer (4).

3. Injecteur à effet coanda selon la revendication 1 ou la revendication 2, **caractérisé en ce que** la préchambre (5) comprend deux ouvertures d'entrée (6) opposées l'une à l'autre.

4. Injecteur à effet coanda selon l'une quelconque ou plusieurs des revendications 1 à 3, **caractérisé en ce que**, dans la zone de l'écoulement, l'ouverture d'entrée (6) de la préchambre (5) est munie de parties arrondies (15) assurant une fonction se rapportant aux caractéristiques d'écoulement.

5. Injecteur à effet coanda selon l'une quelconque ou plusieurs des revendications 1 à 4, **caractérisé en ce que** la fente d'injecteur (8) est réglable.

6. Injecteur à effet coanda selon l'une quelconque ou plusieurs des revendications 1 à 5, **caractérisé en ce que** la préchambre (5) comprend un couvercle réglable (10) par l'intermédiaire duquel peut être réglée la fente d'injecteur (8).

7. Injecteur à effet coanda selon la revendication 5, **caractérisé en ce que** pour le réglage le couvercle (10) comprend au moins deux évidements d'espacement (16).

8. Injecteur à effet coanda selon l'une quelconque ou plusieurs des revendications 1 à 7, **caractérisé en ce que** l'ouverture d'entrée (6) de la préchambre (5) est disposée dans le couvercle (10).

9. Injecteur à effet coanda selon l'une quelconque ou plusieurs des revendications 6 à 8, **caractérisé en ce que** le couvercle (10) fait l'objet d'une liaison étanche au gaz avec la préchambre (5).

10. Injecteur à effet coanda selon l'une quelconque ou plusieurs des revendications 1 à 9, **caractérisé en ce qu'**il est soudé sur la conduite de gaz sous pression (2).

11. Injecteur à effet coanda selon l'une quelconque ou plusieurs des revendications 1 à 10, **caractérisé en ce qu'**il peut être raccordé à la conduite de gaz sous pression (2) par au moins une pièce de liaison (18).

12. Conduite de gaz sous pression destinée à être raccordée à un injecteur à effet coanda selon l'une quelconque ou plusieurs des revendications 1 à 11, **caractérisée en ce qu'**elle est munie dans la zone de raccordement de l'ouverture d'entrée (6) de la préchambre (5) de parties arrondies (17) assurant une fonction se rapportant aux caractéristiques d'écoulement.

13. Conduite de gaz sous pression selon la revendication 12, **caractérisée en ce qu'**au moins dans la zone de raccordement de l'ouverture d'entrée (6) de la préchambre (5) elle est munie de parties plates (19).
